# EUROPÄISCHE PATENTSCHRIFT

(11) **EP 0 548 633 B1**
(45) Veröffentlichungstag und Bekanntmachung des Hinweises auf die Patenterteilung: **31.01.1996**
(21) Anmeldenummer: 92120771.8
(22) Anmeldetag: 05.12.1992
(51) Int. Cl.: B65G 67/02

(54) **Vorrichtung zum Festhalten eines Fahrzeuges an einer Rampe**
Device for restraining a vehicle on a ramp
Dispositif pour retenir un véhicule à une rampe

(30) Priorität: 20.12.1991 DE 9115804 U
(43) Veröffentlichungstag der Anmeldung: 30.06.1993
(73) Patentinhaber: VAN WIJK NEDERLAND B.V., NL-8243 PH Lelystad (NL)
(72) Erfinder: Dores, Antonio Pereira das, NL-8224 HL Lelystad (NL)
(74) Vertreter: Beil, Hans Chr., Dr.

(56) Entgegenhaltungen:
- US-A- 4 674 941
- US-A- 4 861 217
- US-A- 4 964 777

## Beschreibung

Gegenstand der Erfindung ist eine Vorrichtung zum Festhalten eines Fahrzeuges an einer Laderampe, welche nach dem Andocken wirksam wird und so unbeabsichtigtes Wegrollen oder zu frühes Wegfahren des Fahrzeuges während des Verladevorganges verhindert, sowie nach Beendigung des Verladevorganges das Fahrzeug wieder freigibt.

Die meisten Fahrzeuge, die im europäischen Raum zu Transportzwecken be- und entladen werden, weisen einen Unterfahrschutz auf, der in Europa aufgrund entsprechender Richtlinien bestimmten Erfordernissen genügen muß:
a) er darf einen maximalen Abstand, von der Rückseite des Aufbaus gemessen, nicht überschreiten,
b) er darf eine maximale Höhe vom Boden aus gemessen nicht überschreiten,
c) er muß einer bestimmten Zug- bzw. Druckkraft widerstehen.

Diese Erfordernisse sind auch bei der Konstruktion von Haltevorrichtungen zu beachten, welche an dem Unterfahrschutz befestigt werden sollen. Hinzu kommt, daß solche Haltesysteme auch vom eventuellen Vorhandensein von Ladebordwänden der vorgenannten Fahrzeuge beeinflußt werden.

Die europäische Patentanmeldung EP 0 452 519 A1 zeigt eine derartige Vorrichtung, die sich bereits in der Praxis bewährt hat. Diese Vorrichtung umfaßt ein Gehäuse, in dem ein um eine Achse vertikal drehbarer Haken gelagert ist, der in Richtung hintere Deckplatte mit einem Zugkabel und in Richtung vordere Deckplatte mit einer Verriegelungsvorrichtung verbunden ist, sowie eine Antriebsvorrichtung hierfür, die über eine Führungsstange und Stützplatten mit dem Haken in Verbindung steht.

Nachteil einer derartigen Ausführung ist jedoch, daß der Haken beim Drehen in die Arbeitsstellung eine relativ große Kreisteilfläche überstreicht und so gegen etwaige Hindernisse, wie Bremsleitungen oder Reserveräder, dreht und somit das Fahrzeug manchmal nicht gehalten werden kann oder Schaden entsteht.

Ein zweiter Nachteil ist, daß bei Längsneigung des Fahrzeuges dieses oben gegen den Rampenpuffer drückt und beim Anheben der Vorderseite oder beim Senken der Rückseite der Unterfahrschutz dann mit großer Kraft gegen den Haken drückt.

Dies erfordert teure Bauteile, wie z.B. Pumpen mit hohem Arbeitsdruck, da der Haken mit großem Kraftaufwand aus dieser Situation gelöst und in den Ruhestand gebracht werden muß, damit das Fahrzeug wieder wegfahren kann.

Ziel der vorliegenden Erfindung ist es, die genannten Nachteile zu beseitigen und eine Haltevorrichtung zu konstruieren, die leicht und kostengünstig herzustellen ist und störungsfrei funktioniert und die darüberhinaus allen obengenannten Forderungen genügt.

Dieses Ziel wird erfindungsgemäß dadurch erreicht, daß der Haken zwei Flansche (8a) aufweist, durch welche parallel zueinander oben und unten die Achsen (9) und (10) verlaufen, die einerseits mit einem Dehnelement (20) und andererseits mit einer geeigneten Antriebsvorrichtung (17),(18) in Verbindung stehen. Beide Achsen werden über eine gemeinsame Führung geleitet, welche aus drei Stangen (13a,b,c) gebildet wird, und bewirken somit durch den Antrieb gesteuerte Auf- bzw. Abwärtsbewegungen des Hakens, mit welchem die in Lagern (11) gelagerten Achsen (9) über die Flansche (8a) starr verbunden sind, während die in Lagern (12) gelagerte Achse (10) mit dem Haken (8) beweglich verbunden ist. Der Antrieb (17), (18) greift somit an Achse (10) an, bewegt diese in horizontaler Richtung. Dadurch werden die Achsen (9) in der durch die Stangen (13a, b) gebildeten Führung ebenfalls nach vorne in Richtung Rampe bewegt. Da jedoch die Achsen (9) fest mit dem Haken (8) verbunden sind, führt die fortschreitende Bewegung der beweglich gelagerten Achse (10) zur Drehung des Hakens (8) und damit zu einer Aufwärts- bzw. Abwärtsbewegung. Dabei ist die Drehbewegung des Hakens exakt beschränkt, so daß Schäden und unsichere Haltepositionen am Fahrzeug vermieden werden können.

Die Erfindung wird anhand der nachfolgenden Zeichnungen näher erläutert.

Dabei zeigt
Figur 1 einen Längsschnitt durch die erfindungsgemäße Vorrichung mit Rampe und bereitstehendem Fahrzeug im gehaltenen Zustand,
Figur 2 einen Längsschnitt durch die erfindungsgemäße Vorichtung im Ruhestand,
Figuren 3 und 4 zeigen den Bewegungsablauf des Hakens beim Anheben,
Figur 5 die am weitesten von der Rampe entfernte verriegelte Stellung,
Figur 6 eine verriegelte Stellung im Bereich (b),
Figur 7 die Situation, wenn das Fahrzeug im Notfall mit Vollgas wegfährt,
Figur 8 die Situation mit aus der Führung gefallenem Haken,
Figur 9 eine Ansicht des Hakens mit Achsen und Führungen,
Figur 10 einen Schnitt entlang der Linie A-A gemäß Figur 9 und
Figur 11 ein Detail eines Lagers (11), (12).

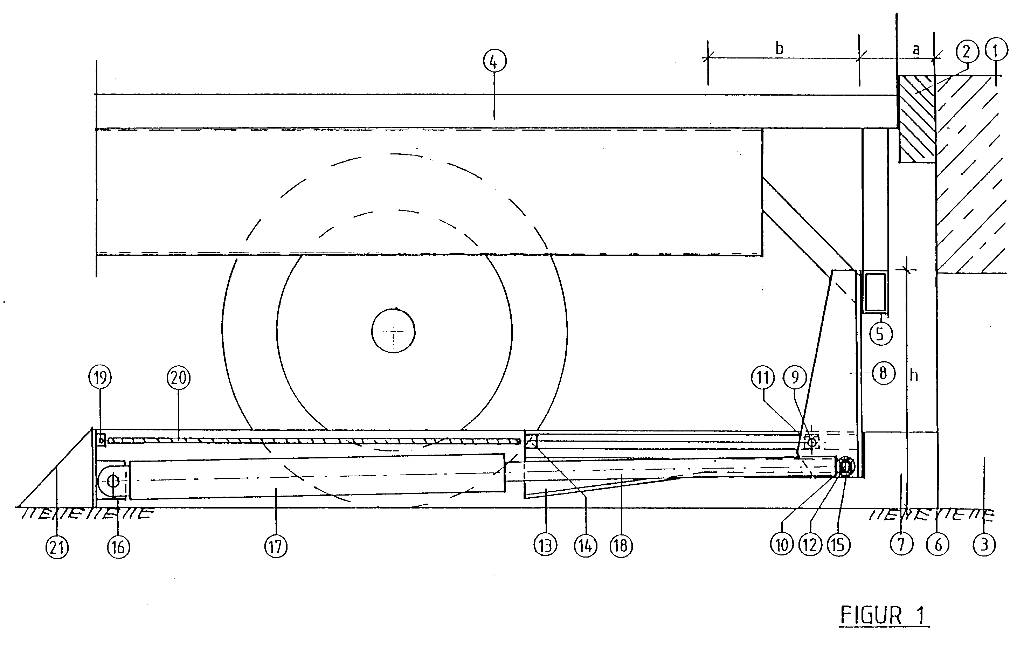

Figur 1 zeigt eine Rampe (1) mit einem Puffer (2), eine etwaige Unterfahrbarkeit (3), ein Fahrzeug (4), das an Puffer (2) steht und einen Unterfahrschutz (5) aufweist, der durch den Haken (8) festgehalten wird, der über Führung (13) in Gehäuse (7), welches wie Fahrzeug (4) auf dem Boden (6) steht, gehalten wird. Dies erfolgt derart, daß die im Lager (11) gehaltenen Achsen (9) von oben sowie die im Lager (12) gehaltene Achse (10) von unten gegen die Führung (13) drücken und so ein Verdrehen der Hakenoberseite von Rampe (1) weg verhindert. Als Antriebsvorrichtung dient vorzugsweise ein Zylinder (17) mit einer Kolbenstange (18). Diese nimmt die horizontal auftretende Kraft auf, die durch den Unterfahrschutz (5) auf Haken (8) verursacht wird. Wie in Figur 1 dargestellt, befindet sich der Haken (8) im Abstand (a) von Rampe (1) entfernt. Dieser Abstand (a) errechnet sich aus der Pufferdicke und dem kleinsten Abstand der Unterfahrschutzvorderseite von der Fahrzeugrückseite. Vorzugsweise kann der Zylinder (17) mit Kolben (18) als doppelt wirkender Hydraulikzylinder ausgeführt sein. Seine Funktionsweise läßt sich dann wie folgt erläutern:
Vorzugsweise versorgt die zum Antrieb benötigte Pumpe den Zylinder (17) beim Ausfahren mit Druckmittel mit niedrigem, beim Einfahren mit Druckmittel mit hohem Druck. Ein gegebenenfalls vorhandener Druckschalter bewirkt beim Ausfahren, daß der Motor ausgeschaltet wird, sobald der Haken (8) gegen den Unterfahrschutz (5) stößt und somit der Druck im System ansteigt.
Fällt der Druck wieder ab, schaltet der Motor wieder ein, der Haken (8) bewegt sich in Richtung Rampe (1), bis er den Unterfahrschutz (5) erreicht. Sodann steigt der Druck erneut an und der Druckschalter schaltet den Motor aus.

In Haltestellung ist das Einfahren des Kolbens (18) in Zylinder (17) blockiert, der Zylinder (17) mit Kolben (18) hält den Haken (8) in Stellung vor dem Unterfahrschutz (5). Das Fahrzeug kann also nicht wegfahren. Der Unterfahrschutz (5) drückt gegen den Haken (8).

Der Antrieb kann auch auf andere als die bereits beschriebene Weise erfolgen, wie z.B. unter Verwendung von pneumatischen Zylindern oder über umlaufende Ketten.

Die erfindungsgemäße Vorrichtung gestattet somit die Wahl unterschiedlicher Antriebssysteme und Arten der Steuerung, welche eingesetzt werden können, da das Wesentliche vorliegender Neuerung im besonderen Bewegungsablauf des Hakens (8) durch die über die Führung (13) gesteuerte Bewegung der Achsen (9) und (10) liegt.

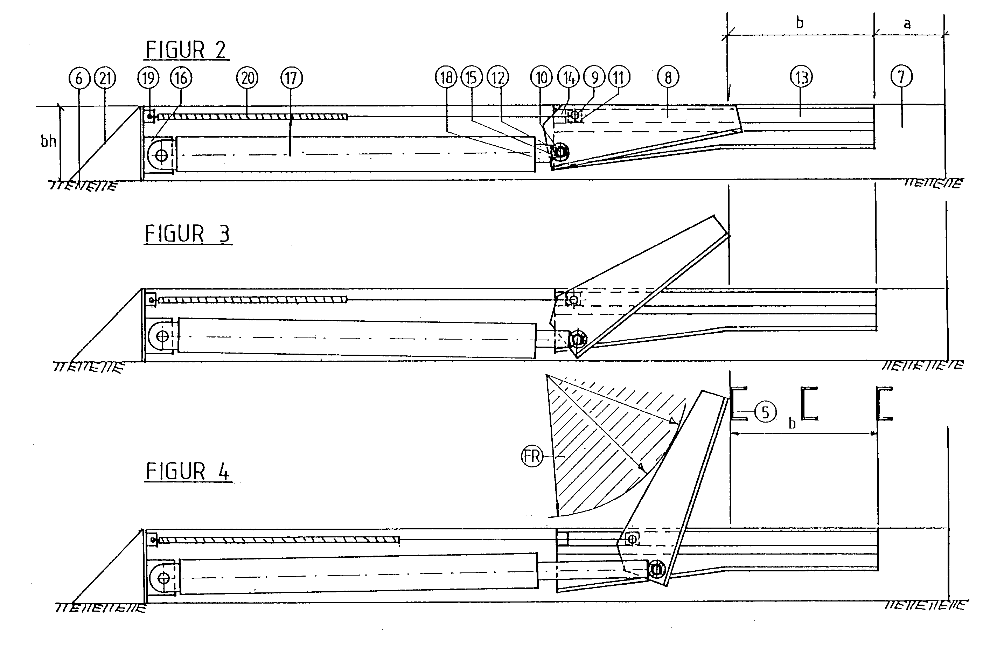

Dieser Mechanismus wird anhand der Figuren 2 bis 6 näher erläutert.

Figur 2 zeigt den Haken (8) in Ruhestellung im Gehäuse (7). Das Fahrzeug (4) fährt gegen den Puffer (2) der Rampe (1). Dadurch befindet sich der Unterfahrschutz (5) im Bereich (b). Der Kolben (18) des Zylinders (17), der einerseits am Gehäuse (7) und andererseits an Achse (10) befestigt ist (Befestigungspunkte 15 bzw. 16) ist ganz eingefahren. Oberhalb und parallel zum Zylinder (17) bzw. Kolben (18) verläuft ein Dehnelement (20), das am Gehäuse (7) und an Achse (9) befestigt ist (Befestigungspunkt 19). Die Achsen (9) und (10) verlaufen in der durch die Stangen (13a, 13b) bzw. (13b, 13c) gebildeten Führung, wobei die Stangen (13a), (13b) im gesamten Bereich parallel zueinander angeordnet sind, während die Stange (13c) in dem der Rampe (1) abgekehrten Arbeitsbereich schräg nach oben und im Arbeitsbereich (b) parallel zueinander verläuft.

Das Lager (12) der Achse (10) ist in dieser Position frei beweglich zwischen den Stangen (13b) und (13c).

Wird der Motor aktiviert, wird der Kolben (18) aus dem Zylinder (17) bewegt. Da das Dehnelement (20) vorgespannt ist, hält es die Achsen (9) fest.

Wie weiterhin aus Figur 3 ersichtlich ist, kann sich bei auferlegter Antriebskraft die bewegliche Achse (10), die unterhalb der Achsen (9) angeordnet ist, in der Vorwärtsbewegung um die Achsen (9) drehen, welche starr mit dem Haken (8) verbunden sind. Der Zylinder (17) mit dem Kolben (18) senkt sich dabei nach unten, relativ zur ursprünglichen Position, und das Lager (12) der Achse (10) liegt auf dem unteren Führungsteil (13c) auf. Wird der Kolben (18) nun weiter aus dem Zylinder (17) bewegt, bewegt sich das Lager (12) mit der Achse (10) über die untere Führungsstange (13c) hinweg nach oben. Da die dadurch mitbewegten Achsen (9) starr mit dem Haken (8) an den Flanschen (8a) verbunden sind, richtet sich der damit verbundene Haken langsam - entsprechend der auf den Kolben (18) wirkenden Kraft - auf.

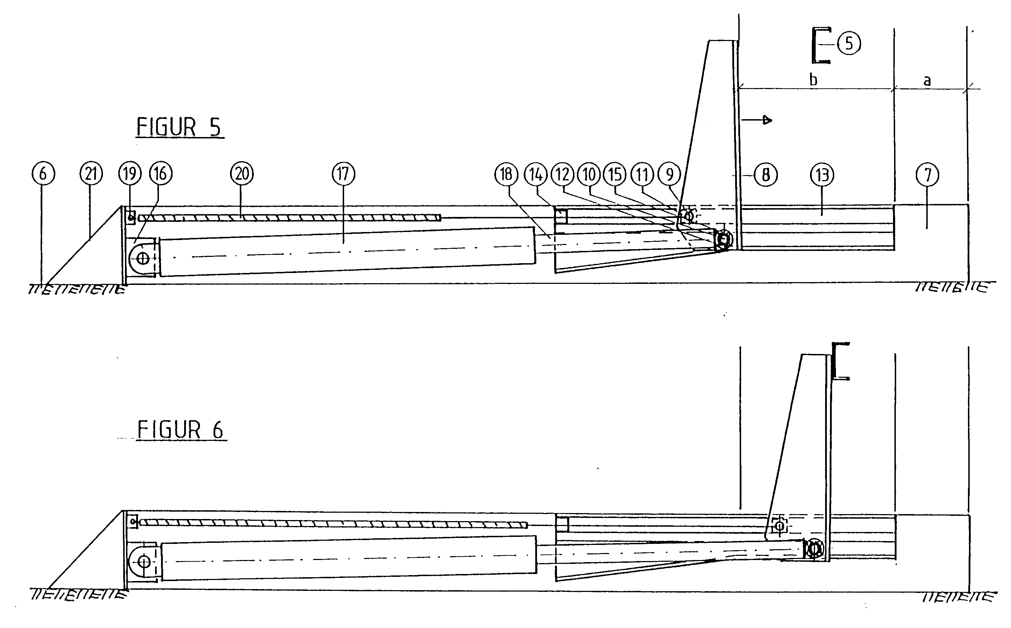

Der weitere Bewegungsablauf des Hakens (8) ist in Figur 4 näher dargestellt. Dort sind drei mögliche Positionen des Unterfahrschutzes (5) eines an eine Rampe herangefahrenen Fahrzeugs aufgezeigt. Je weiter der Haken (8) auf die geschilderte Weise in Richtung vertikale Position gebracht wird, um so näher rückt er in Richtung Rampe (1).

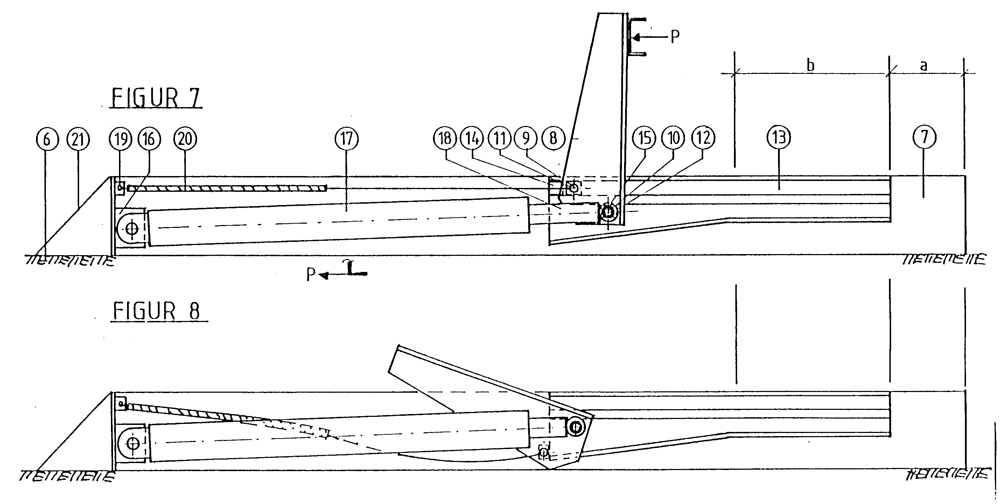

In den Figuren 5 und 6 ist die Maximalposition (Senkrechtstellung) des Hakens (8) aufgezeigt. Hierbei befindet sich die untere Führungsstange (13c) parallel zur mittleren und oberen Führungsstange (13b) bzw. (13a). Durch die besondere Anordnung der Achsen (9) und (10) und die Geometrie der Führung (13), die den Bewegungsablauf des Hakens (8) exakt steuern, bleibt beim Hochdrehen vor dem Unterfahrschutz (5) ein relativ großer Freiraum (FR), wodurch Schäden dort vermieden werden.

Der Haken (8), der seine senkrechte Position erreicht hat, wird mittels Kolben (18) gegen den Unterbodenschutz (5) bewegt und kann somit das Fahrzeug festhalten.

Vorzugsweise weist der Antrieb (17), (18) einen Druckschalter auf. Dieser schaltet den Antrieb/Motor ab, sobald die Festhalteposition des Hakens (8) erreicht wird. Im Falle eines Druckzylinders/Kolben-Antriebs wird dabei das weitere Ausströmen des Druckmittels unterbunden. Werden andere Antriebssysteme verwendet, kann durch den genannten Schalter eine dem System entsprechende Unterbindung der weiteren Bewegung des Antriebs erfolgen.
In dieser Position verhindert der Haken (8), daß sich der Unterfahrschutz (5) von der Rampe (1) wegbewegt, wenn z.B. beim Laden auftretende Bremskräfte der Flurförderzeuge o.ä. auf den Haken (8) wirken.

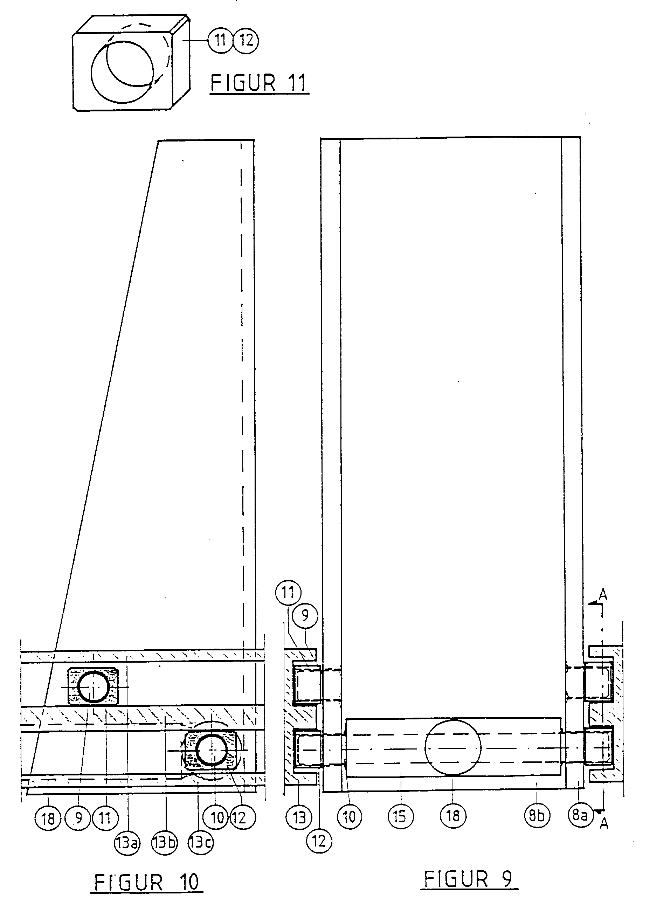

In den Figuren 9 und 10 ist die Verriegelungsstellung des Hakens (8) aufgezeigt. Diese wird wie folgt erreicht:
Die Achse (10), die mit dem Kolben (18) z.B. über ein Anschlußrohr (15) oder ähnliches fest verbunden ist, verläuft durch den Flansch (8a) und mündet seitlich über das Lager (12) in den Raum zwischen mittlerem und unterem Führungsteil (13b) bzw. (13c). Der Kolben (18) bzw. die Antriebskraft (17), (18) wirkt also senkrecht auf die Achse (10) und bewegt diese nach vorne bzw. nach hinten. Links und rechts vom Flansch (8a) verlaufen die Achsen (9) und münden über das Lager (11) in die Öffnung zwischen oberer Führungsstange (13a) und mittlerer Führungsstange (13b).
Wirkt nun eine Kraft z.B. über den Unterfahrschutz (5) an der Seite (8b) gegen den Haken (8), so wird das Lager (11) der Achsen (9) von oben und das Lager (12) der Achse (10) von unten gegen die mittlere Führungsstange (13b) gedrückt. Der Kolben (18) verhindert das horizontale Ausweichen von Achse (10) und somit von Lager (12). Die Haltestellung ist erreicht. Ein Großteil der horizontalen Kraft wird durch die Reibung zwischen Lager (11) und mittlerer Führungsstange (13b) sowie Lager (12) und mittlerer Führung (13b) aufgenommen.

Ist der Ladevorgang beendet, wird das Zurückströmen des Druckmittels aus der beim Anfahren beaufschlagten Kammer wieder ermöglicht. Während der Haken (8) noch durch die Reibung zwischen mittlerer Führungsstange (13b) und Lager (11), (12) gehalten wird, wird nun Druckmittel in die zum Einfahren zu beaufschlagende Kammer gepumpt. Die Reibungskraft wird überwunden, der Haken (8) bewegt sich zusammen mit dem einfahrenden Kolben (18) von der Rampe (1) und dem Unterfahrschutz (5) weg. Das Dehnelement (20) zieht die Achse (9) und der Kolben (18) die Achse (10) zurück. Erreicht das Lager (12) wieder die untere Führungsstange (13c), so senkt sich der Haken (8) wieder in Ruhestellung (vgl. Figur 2).

Vorzugsweise erfolgt die Einfahrbewegung des Hakens (8) unter dem Einfluß eines Druckmittels mit hohem Druck bzw., falls Antriebssysteme anderer Art gewählt werden, mit hoher Antriebskraft, während die Ausfahrbewegung des Hakens (8) vorzugsweise unter dem Einfluß eines Druckmittels mit niedrigem Druck bzw. mit geringer Antriebskraft erfolgt.

Falls als Antrieb ein System Zylinder/Kolben gewählt wird, so eignet sich hierfür insbesondere ein doppelt wirkender hydraulischer Zylinder.

Als Dehnelement (20) wird bevorzugt eine Feder mit linearer Kraftverteilung gewählt.

Ferner kann die erfindungsgemäße Vorrichtung bevorzugt mit optischen Lichtzeichen ausgestattet sein, die den Zeitpunkt der Verriegelung bzw. Lösung des Hakens (8) dem Bedienungspersonal innerhalb des Ladebereichs anzeigen, so daß hier ein sicheres Be- und Entladen gewährleistet ist.

Darüberhinaus kann insbesondere auch eine Schaltvorrichtung mit den Zeichen "Verriegeln", "Entriegeln" und "Bypass für ungesichertes Laden" verwendet werden, die die automatische Steuerung des Systems weiter vereinfacht.

Das Gehäuse (7) der Vorrichtung weist vorzugsweise eine Höhe (bh) von etwa maximal 200 mm auf.

Ferner kann es auch von Vorteil sein, am Antrieb (17),(18) ein Antriebsbegrenzungsventil, insbesondere im Falle eines Hydraulikzylinders ein Druckbegrenzungsventil, einzusetzen. Dieses öffnet sich im Falle sehr großer, auf den Unterfahrschutz (5) wirkenden Kräfte (P), so daß sich der Haken (8) von der Rampe (1) wegbewegt und Schäden vermieden werden. In gleicher Weise wirkt das Druckbegrenzungsventil in bestimmten Not- oder Gefahrensituationen, z.B. bei Brand o.ä., wenn das Fahrzeug plötzlich wegfahren muß. Durch das Ventil entfernt sich der Haken (8), wenn das Fahrzeug rasch wegfahren muß.

Eine weitere bevorzugte Ausführungsform der erfindungsgemässen Vorrichtung kann ferner ein Schließstück (14) aufweisen, das in Führung (13) angeordnet ist. Dieses bricht dann bei einer bestimmten Krafteinwirkung über das Lager (11) und fällt aus dem Raum zwischen oberen und mittleren Führungsstangen (13a) bzw. (13b). Dadurch kann das Lager (11) zusammen mit den Achsen (9) aus der Führung zwischen den Stangen (13a,b) fallen.
Wie in Figur 8 gezeigt, fällt dann der Haken (8) nach vorne, das Fahrzeug (4) kann somit ungehindert wegfahren.

In Figur 11 ist eine bevorzugte Ausführungsform eines Lagers (11) oder (12) dargestellt, welches - wie erwähnt - eine ungehinderte Bewegung in der durch die Stangen (13,a,b,c) gebildeten Führung einerseits und andererseits eine günstige Druckverteilung auf die Führungsflächen ermöglichen soll. Dabei sind die Lager (11), (12) so gestaltet, daß die Achsen (9), (10) ungehindert durch die aus den Stangen (13a,b,c) bestehende Führung bewegt werden können. Die Lager (11), (12) können vorzugsweise wartungsfreie Gleitlager sein.

Die zur Bildung der Führung (13) benötigten Stangen (13a,b,c) können aus Stahl bestehen.

Während die Achse (10) durch die gesamte Anordnung hindurch verläuft, können die Achsen (9) vorzugsweise Teilachsen sein, die links und rechts des Hakens (8) auf die beschriebene Weise befestigt sind.

Mit der erfindungsgemäßen Vorrichtung werden somit auf kostengünstige und einfache Weise alle an eine solche Vorrichtung zu stellenden eingangs geschilderten Forderungen erfüllt und gleichzeitig genügend Freiraum zum festzuhaltenden Fahrzeug geschaffen, so daß Schäden an diesem vermieden werden können.

Die Vorrichtung eignet sich - wie geschildert - zum Festhalten eines Fahrzeugs an einer Laderampe, insbesondere zum Festhalten eines Fahrzeugs an dessen Unterfahrschutz. Sie kann jedoch gleichermaßen auch zum Blockieren der Räder eines Fahrzeugs eingesetzt werden.

## Patentansprüche

1. Vorrichtung zum Festhalten eines Fahrzeuges an einer Rampe, umfassend ein Gehäuse (7), eine Antriebsvorrichtung (17),(18) und einen Haken (8), dadurch gekennzeichnet,
1.1 daß der Haken (8) seitlich Flansche (8a) aufweist, welche am unteren Ende zwei Achsen (9) und eine Achse (10) tragen,
1.2 die Achse (10) unterhalb der Achsen (9) und parallel dazu angeordnet ist und die Achse (10) in Lagern (12) gelagert ist und beweglich am Flansch (8a) befestigt ist, während die Achsen (9), die in Lagern (11) gelagert sind, starr am Flansch (8a) befestigt sind,
1.3 die Lager (11) bzw. (12) in einer aus Führungsstangen (13a), (13b) bzw. (13b), (13c) gebildeten Führung verlaufen,
1.4 die obere Führungsstange (13a) und die mittlere Führungsstange (13b) über den gesamten Bereich parallel zueinander angeordnet sind, während die untere Führungsstange (13c) im der Rampe (1) abgekehrten Arbeitsbereich schräg nach oben, in einem Arbeitsbereich (b), in dem der Haken (8) roll aufgerichtet ist, jedoch ebenfalls parallel zu (13a) und (13b) angeordnet ist,
1.5 die Antriebsvorrichtung (17), (18) mit der Achse (10) in Verbindung steht und deren Krafteinwirkung senkrecht auf die Achse (10) erfolgt, so daß die Bewegung der Achse (10) und der Achsen (9) die Aufwärtsbewegung des Hakens (8) bewirkt,
1.6 ein Dehnelement (20) oberhalb und parallel zum Antriebselement (17), (18) angeordnet und einerseits am Gehäuse (7), andererseits an den Achsen (9) befestigt ist.

2. Vorrichtung gemäß Anspruch 1, dadurch gekennzeichnet, daß die Achsen (9) Teilachsen sind.

3. Vorrichtung gemäß Anspruch 1 oder 2, dadurch gekennzeichnet, daß zwischen der unteren Führungsstange (13c) und zwischen Lagern (12) mit Haken (8) in horizontaler Stellung ein Freiraum vorhanden ist.

4. Vorrichtung gemäß einem der Ansprüche 1 bis 3, dadurch gekennzeichnet, daß zwischen der oberen Führungsstange (13a) und der mittleren Führungsstange (13b) ein Schließstück (14) vorhanden ist, welches bei großer Krafteinwirkung bricht und so die Bewegung des Lagers (11) aus dem Raum zwischen der Führungsstange (13a) und der Führungsstange (13b) heraus erlaubt.

5. Vorrichtung gemäß einem der Ansprüche 1 bis 4, dadurch gekennzeichnet, daß Antrieb (17), (18) ein doppelt wirkender hydraulischer Zylinder ist.

6. Vorrichtung gemäß einem der Ansprüche 1 bis 5, dadurch gekennzeichnet, daß das Dehnelement (20) eine Feder mit linearer Kraftverteilung ist.

7. Vorrichtung gemäß einem der Ansprüche 1 bis 6, dadurch gekennzeichnet, daß die Höhe (bh) des Gehäuses (7) maximal 200 mm beträgt.

8. Vorrichtung gemäß einem der Ansprüche 5 bis 7, dadurch gekennzeichnet, daß der Zylinder zum Ausfahren des Hakens (8) Druckmittel mit niedrigem Druck und zum Einfahren des Hakens (8) Druckmittel mit hohem Druck aufweist.

9. Vorrichtung gemäß einem der Ansprüche 1 bis 8, dadurch gekennzeichnet, daß sie zusätzlich eine Schaltung mit optischen Lichtzeichen aufweist.

10. Vorrichtung gemäß einem der Ansprüche 1 bis 9, dadurch gekennzeichnet, daß sie zusätzlich eine Schaltvorrichtung mit wenigstens 3 Bedienungsschaltern "Verriegeln", "Entriegeln" und "Bypass für ungesichertes Laden" aufweist.

11. Vorrichtung gemäß einem der Ansprüche 1 bis 10, dadurch gekennzeichnet, daß der Antrieb (17), (18) ein pneumatischer Zylinder ist.

12. Vorrichtung gemäß einem der Ansprüche 1 bis 10, dadurch gekennzeichnet, daß der Antrieb (17), (18) eine umlaufende Kette ist.

13. Vorrichtung gemäß einem der Ansprüche 1 bis 12, dadurch gekennzeichnet, daß die Antriebsvorrichtung (17), (18) einen Druckschalter und/oder ein Druckbegrenzungsventil aufweist.

14. Verwendung einer Vorrichtung gemäß einem der Ansprüche 1-13 zum Festhalten eines Fahrzeugs an einer Laderampe, insbesondere zum Festhalten eines Fahrzeugs an dessen Unterfahrschutz.

15. Verwendung einer Vorrichtung gemäß einem der Ansprüche 1 bis 13 zum Blockieren der Räder eines Fahrzeugs.

## Claims

1. Device for restraining a vehicle on a ramp, comprising a housing (7), a drive device (17), (18) and a hook (8), characterized in that
1.1 the hook (8) has flanges (8a) at the side which carry two axles (9) and one axle (10) at the lower end,
1.2 the axle (10) is arranged under the axles (9) and parallel to them and the axle (10) is mounted in bearings (12) and movably attached to the flange (8a), whereas the axles (9) which are mounted in bearings (11) are rigidly attached to the flange (8a),
1.3 the bearings (11) and/or (12) run in a guide formed from guide bars (13a), (13b) and/or (13b), (13c),
1.4 the upper guide bar (13a) and the central guide bar (13b) are arranged parallel to each other over the entire region, whereas the lower guide bar (13c) is arranged upwards at an angle, in the working region facing away from the ramp (1), but is also parallel to (13a) and (13b) in a working region (b) in which the hook (8) is fully upright.
1.5 the drive device (17), (18) is connected to the axle (10) and its force is applied perpendicularly onto the axle (10) so that the movement of the axle (10) and of the axles (9) brings about the upwards movement of the hook (8),
1.6 an expansion element (20) is arranged above and parallel to the drive element (17), (18) and is attached to the housing (7) on the one hand and to the axles (9) on the other hand.

2. Device according to Claim 1, characterized in that the axles (9) are partial axles.

3. Device according to Claim 1 or 2, characterized in that a clearance is present between the lower guide bar (13c) and between bearings (12) with hook (8) in the horizontal position.

4. Device according to one of Claims 1 to 3, characterized in that a closure device (14) is present between the upper guide bar (13a) and the central guide bar (13b), which closure device breaks if a large force is applied and thus permits the movement of the bearing (11) out of the chamber between the guide bar (13a) and the guide bar (13b).

5. Device according to one of Claims 1 to 4, characterized in that drive (17), (18) is a double-acting hydraulic cylinder.

6. Device according to one of Claims 1 to 5, characterized in that the expansion element (20) is a spring with linear force distribution.

7. Device according to one of Claims 1 to 6, characterized in that the height (bh) of the housing (7) is 200 mm maximum.

8. Device according to one of Claims 5 to 7, characterized in that the cylinder has pressure medium at low pressure for extending the hook (8) and pressure medium at high pressure for retracting the hook (8).

9. Device according to one of Claims 1 to 8, characterized in that it additionally has a circuit with optical light signals.

10. Device according to one of Claims 1 to 9, characterized in that it additionally has a switching device with at least 3 operating switches "lock", "unlock" and "bypass for unsafe loading".

11. Device according to one of Claims 1 to 10, characterized in that the drive (17), (18) is a pneumatic cylinder.

12. Device according to one of Claims 1 to 10, characterized in that the drive (17), (18) is a rotating chain.

13. Device according to one of Claims 1 to 12, characterized in that the drive device (17), (18) has a pressure switch and/or a pressure limiting valve.

14. Use of a device according to one of Claims 1-13 for restraining a vehicle on a loading ramp, particularly for restraining a vehicle by its underbody protection.

15. Use of a device according to one of Claims 1 to 13 for locking the wheels of a vehicle.

## Revendications

1. Dispositif pour retenir un véhicule sur une rampe, comportant un boîtier (7), un dispositif d'entraînement (17), (18) et un crochet (8), caractérisé en ce que :
1.1 le crochet (8) présente latéralement des brides (8a) qui portent à l'extrémité inférieure deux axes (9) et un axe (10),
1.2 l'axe (10) est agencé au-dessous des axes (9) et parallèlement à ceux-ci, et l'axe (10) est monté dans des paliers (12) et fixé de façon mobile sur la bride (8a), tandis que les axes (9) qui sont montés dans des paliers (11) sont fixés rigidement sur la bride (8a),
1.3 les paliers (11) et (12) s'étendent dans un guidage formé par des tiges de guidage (13a), (13b), et (13b), (13c),
1.4 la tige de guidage supérieure (13a) et la tige de guidage médiane (13b) sont agencées parallèlement l'une à l'autre sur l'ensemble de la région, tandis que la tige de guidage inférieure (13c) est agencée dans la région de travail détournée de la rampe (1), en oblique vers le haut, mais dans une région de travail (b) dans laquelle le crochet (8) est entièrement redressé, également parallèlement aux tiges (13a) et (13b),
1.5 le dispositif d'entraînement (17), (18) se trouve en liaison avec l'axe (10), et l'action de sa force s'effectue perpendiculairement sur l'axe (10), de sorte que le mouvement de l'axe (10) et des axes (9) provoque le mouvement vers le haut du crochet (8),
1.6 un élément d'extension (20) est agencé au-dessus et parallèlement à l'élément d'entraînement (17), (18), et il est fixé d'une part sur le boîtier (7), et d'autre part sur les axes (9).

2. Dispositif selon la revendication 1, caractérisé en ce que les axes (9) sont des axes partiels.

3. Dispositif selon l'une ou l'autre des revendications 1 et 2, caractérisé en ce qu'il existe entre la tige de guidage inférieure (13c) et entre les paliers (12) comportant le crochet (8) en position horizontale un espace libre.

4. Dispositif selon l'une quelconque des revendications 1 à 3, caractérisé en ce qu'il existe entre la tige de guidage supérieure (13a) et la tige de guidage médiane (13b) un élément de fermeture (14) qui se brise lors de l'action d'une force élevée et qui permet ainsi le mouvement du palier (11) hors de l'espace entre la tige de guidage (13a) et la tige de guidage (13b).

5. Dispositif selon l'une quelconque des revendications 1 à 4, caractérisé en ce que l'entraînement (17), (18) est un cylindre hydraulique à double effet.

6. Dispositif selon l'une quelconque des revendications 1 à 5, caractérisé en ce que l'élément d'extension (20) est un ressort à répartition de force linéaire.

7. Dispositif selon l'une quelconque des revendications 1 à 6, caractérisé en ce que la hauteur (bh) du boîtier (7) s'élève au maximum à 200 mm.

8. Dispositif selon l'une quelconque des revendications 5 à 7, caractérisé en ce que, pour le déploiement du crochet (8), le cylindre est alimenté avec un fluide sous basse pression, et pour la rétraction du crochet (8), avec un fluide sous haute pression.

9. Dispositif selon l'une quelconque des revendications 1 à 8, caractérisé en ce qu'il présente en supplément un circuit à signaux lumineux optiques.

10. Dispositif selon l'une quelconque des revendications 1 à 9, caractérisé en ce qu'il présente en supplément un dispositif de passage avec au moins 3 interrupteurs d'actionnement "verrouiller", "déverrouiller" et "dérivation pour chargement non assuré".

11. Dispositif selon l'une quelconque des revendications 1 à 10, caractérisé en ce que l'entraînement (17), (18) est un cylindre pneumatique.

12. Dispositif selon l'une quelconque des revendications 1 à 10, caractérisé en ce que l'entraînement (17), (18) est une chaîne en circulation.

13. Dispositif selon l'une quelconque des revendications 1 à 12, caractérisé en ce que le dispositif d'entraînement (17), (18) présente un interrupteur de pression et/ou une soupape de limitation de pression.

14. Utilisation d'un dispositif selon l'une quelconque des revendications 1 à 13 pour retenir un véhicule sur une rampe de chargement, en particulier pour retenir un véhicule par sa protection anti-encastrement.

15. Utilisation d'un dispositif selon l'une quelconque des revendications 1 à 13 pour bloquer les roues d'un véhicule.
